Europäisches Patentamt

European Patent Office

Office européen des brevets

(19)

(11) Veröffentlichungsnummer: **0 023 009**

**A1**

(12) ## EUROPÄISCHE PATENTANMELDUNG

(21) Anmeldenummer: **80104078.3**

(22) Anmeldetag: **14.07.80**

(51) Int. Cl.³: **A 61 C 1/08**

(30) Priorität: **20.07.79 DE 2929483**

(43) Veröffentlichungstag der Anmeldung:
**28.01.81 Patentblatt 81/4**

(84) Benannte Vertragsstaaten:
**AT CH DE FR GB IT LI SE**

(71) Anmelder: **SIEMENS AKTIENGESELLSCHAFT Berlin
und München**
**Postfach 22 02 61**
**D-8000 München 22(DE)**

(72) Erfinder: **Schuss, Werner**
**In der Lahrbach 18**
**D-6148 Heppenheim(DE)**

(72) Erfinder: **Klose, Hans-Jürgen**
**Gleiwitzer Strasse 44**
**D-6944 Hemsbach(DE)**

(54) **Zahnärztliche Handstückanordnung.**

(57) Handstückanordnung mit einem Antriebsteil (1) mit einer Antriebswelle (12) zum Antrieb einer in einem mit dem Antriebsteil kuppelbaren, und demgegenüber drehbaren Griffteil drehbar gelagerten Aufnahmehülse für ein Zahnbehandlungswerkzeug, sowie mit inkorporierten Kühlmittelleitungsabschnitten (6b, 7b, 6c, 7c) für wenigstens ein Kühlmedium im Antriebsteil (1) und im Griffteil, die über einen Ringkanal (19,20) im einen, und über eine mit diesem korrespondierende, radial in den Ringkanal mündende Öffnung (23) im anderen der gegeneinander verdrehbaren Handstückteile miteinander verbunden sind. Um das Reinigen oder Auswechseln der im Querschnitt relativ kleinen Leitungen zu verbessern, wird vorgeschlagen, daß der Kühlmittelleitungsabschnitt (6b, 7b) mit dem Ringkanal (19,20) einerseits, und der Kühlmittelleitungsabschnitt (6c, 7c) mit der radialen Öffnung (23) andererseits, in je einer Hülse (10,11) befestigt sind, daß die Hülsen (10,11) konzentrisch zueinander angeordnet sind, und daß von den Hülsen die eine (11) am Antriebsteil (1) und die andere (10) am Griffteil gegen Verdrehung gesichert, axial aber lösbar angeordnet sind.

FIG 3

SIEMENS AKTIENGESELLSCHAFT          Unser Zeichen
Berlin und München                  VPA 79 P 5070 EUR

Zahnärztliche Handstückanordnung

Die Erfindung bezieht sich auf eine zahnärztliche Handstückanordnung mit einem Antriebsteil, mit einer Antriebswelle zum Antrieb einer in einem mit dem Antriebsteil kuppelbaren, und demgegenüber drehbaren Griffteil drehbar gelagerten Aufnahmehülse für ein Zahnbehandlungswerkzeug, sowie mit inkorporierten Kühlmittelleitungsabschnitten für wenigstens ein Kühlmedium im Antriebsteil und im Griffteil, die über einen Ringkanal im einen, und über eine mit diesem korrespondierende, radial in den Ringkanal mündende Öffnung im anderen der gegeneinander verdrehbaren Handstückteile miteinander verbunden sind.

Bei der sich in letzter Zeit immer stärker durchsetzenden inkorporierten Kühlmittelleitungsführung, wie sie beispielsweise in der DE-OS 24 31 472 beschrieben ist, besteht das Problem, die im Querschnitt relativ kleinen und daher sehr leicht zu Verstopfungen neigenden Kühlmittelleitungen leicht reinigen oder auswechseln zu können.

Rp 5 Rl / 17.7.1979

In der DE-OS 26 53 588 wurde versucht, dieses Problem für den griffseitigen Handstückteil dadurch zu lösen, daß an der Hülse des Griffteils ein von außen zugängliches Verschlußglied vorgesehen ist, das die Stelle bedeckt, an der sich der Übergang von einem gradlinigen, achsparallel verlaufenden Teil zu einem radialen, in den Ringkanal mündenden Teil des Kühlmittelleitungsabschnittes befindet, und das bei einer eventuellen Verstopfung abgenommen werden kann. Nachteilig bei einer solchen Konstruktion ist, daß zusätzlich zu den für die Verdrehung der beiden Handstückteile ohnehin notwendigen O-Ringdichtungen am Verschlußglied noch weitere Dichtstellen geschaffen werden. Der Vorschlag löst außerdem nicht das Problem der leichten Reinigung bzw. des Auswechselns eventueller verstopfter Leitungen direkt an der Drehkupplungsstelle, also im Bereich der Medienübergabe vom Antriebsteil auf den Griffteil, und speziell im Bereich des Antriebsteils selbst.

Aufgabe der vorliegenden Erfindung ist es, eine Handstückanordnung der eingangs genannten Gattung dahingehend zu verbessern, daß eine durchgehende Medienführung vom Antriebsteil zum Griffteil ohne zusätzliche Dichtstellen und bei geringer Verschmutzungsbzw. Verstopfungsgefahr für die Leitungen bzw. mit der Möglichkeit einer leichteren Reinigung bzw. eines leichteren Austausches von konstruktiv einfachen Teilen bei einer eventuellen Verstopfung erzielt werden kann.

Die gestellte Aufgabe wird gemäß der Erfindung dadurch gelöst, daß der Kühlmittelleitungsabschnitt mit dem Ringkanal einerseits und der Kühlmittelleitungsabschnitt mit der radialen Öffnung andererseits in je einer Hülse befestigt sind, die Hülsen konzentrisch zueinander angeordnet sind, und von den Hülsen die eine am Antriebsteil und die andere am Griffstück gegen Verdrehung gesichert, axial aber lösbar angeordnet sind.

Ein wesentlicher Vorteil der erfindungsgemäßen Konstruktion ist, daß die Kühlmittel nicht in der bzw. durch die die Antriebswelle umgebende Führungshülse geführt sind, vielmehr zur Halterung und Führung der Leitungen separate, fertigungstechnisch einfache und billig herzustellende Hülsen vorgesehen sind. Außer den ohnehin wegen der Drehbarkeit der beiden Handstückteile erforderlichen O-Ringdichtungen an der Medienübergabestelle von einem zum anderen Handstückteil, sind keine weiteren Dichtstellen mehr erforderlich.

Ein Ausführungsbeispiel der Erfindung wird nachfolgend anhand der Figuren 1 bis 3 näher erläutert. Es zeigen:

Fig. 1 die erfindungsgemäße Handstückanordnung in einer schaubildlichen Darstellung in teilweise demontiertem Zustand,

Fig. 2 einen Schnitt entlang der Linie II-II nach Fig. 1 bei montierter Handstückanordnung,

Fig. 3 Einzelheiten der Kühlmittelleitungsanordnung in einer Explosionsdarstellung.

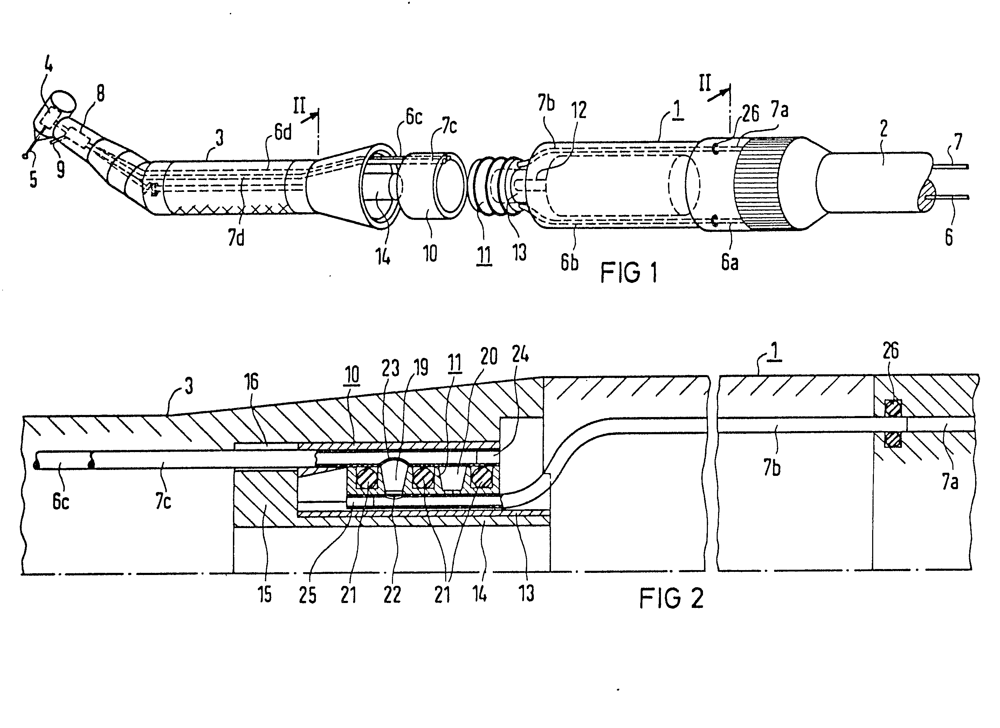

Die Fig. 1 zeigt in einer schaubildlichen Darstellung eine zahnärztliche Handstückanordnung mit einem Antriebsteil 1 an dessen einem Ende ein Versorgungsschlauch 2 angeschlossen und an dessen anderem Ende ein Griffteil 3 drehbar, axial aber abnehmbar anschließbar ist. Bei dem Griffteil 3 handelt es sich um ein sog. Winkelhandstück, in dessen Kopfteil eine

Aufnahmehülse 4 für ein Drehwerkzeug 5 gelagert ist. Die Aufnahmehülse 4 wird in bekannter Weise vom Antriebsteil 1, der einen Elektro- oder Luftmotor enthalten kann, über nicht näher bezeichnete, im Griffteil 3 entsprechend angeordnete Getriebeteile angetrieben. Die Antriebsenergie wird über den Versorgungsschlauch 2 zugeführt. Die Kupplung von Griffteil 3 und Antriebsteil 1 erfolgt in bekannter Weise über eine betriebsmäßig zu entriegelnde Rasteinrichtung, die der besseren Übersichtlichkeit wegen nicht eingezeichnet ist.

Zur Kühlung des Behandlungswerkzeuges 5 bzw. der Präparationsstelle an der mit dem Werkzeug 5 gearbeitet wird, werden üblicherweise am Kopfteil des Handstückes zwei Kühlmedien (Luft und Wasser) benötigt. Der Versorgungsschlauch 2 enthält deshalb wenigstens 2 die Medien an das Handstück heranführende Leitungen 6, 7, sowie im Antriebsteil 1 und im Griffteil 3 angeordnete, die Medien weiterführende Leitungsabschnitte 6a bis 6d und 7a bis 7d. Im Bereich des Kopfteils enden die Leitungsabschnitte 6d, 7d in einer Mischarmatur 8 die eine Düse 9 enthält, an der dann das Mediengemisch (Spray) austreten kann.

In der Darstellung nach Fig. 1 sind zwischen dem Griffteil 3 und dem Antriebsteil 1 zwei Hülsen 10, 11 zu sehen, die im montierten Zustand (vgl. Fig. 2) teleskopartig übereinander greifen und dazu dienen, die Kühlmedien vom Antriebsteil 1 auf das Griffteil 3, unter Gewährleistung der Drehbarkeit der beiden Teile zueinander, zu übertragen.

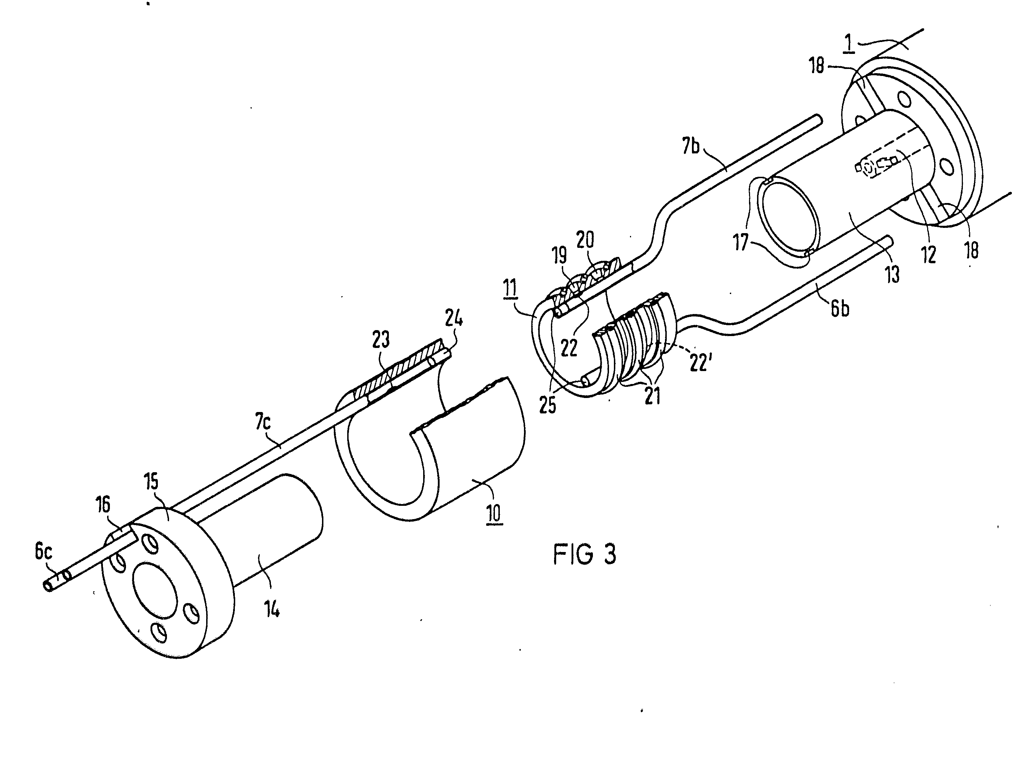

Wie aus den Figuren 2 und 3 zu erkennen ist, greift eine die Antriebswelle 12 des Antriebsteils 1 umgebende Führungshülse 13 im montierten, d. h. zusammengesteckten Zustand, in eine dazu passende Hülse 14 des Griffteils 3 ein. Konzentrisch dazu sind die beiden Hülsen 10 und 11 angeordnet, welche die beiden Leitungsabschnitte 6c, 7c bzw. 6b, 7b tragen.

Aus der Fig. 3, die die Teile in einer Explosionsdarstellung zeigt, ist erkennbar, daß einerseits die Hülse 10 Träger der beiden Kühlmittelleitungsabschnitte 6c und 7c ist, welche in das Griffteil 3 hineinführen und andererseits die Hülse 11 Träger der beiden Kühlmittelleitungsabschnitte 6b, 7b ist, die in das Antriebsteil 1 hineinführen. Die Kühlmittelleitungsabschnitte 6b und 7b sind an der Hülse 10 so angeordnet, daß sie an der Innenwandung vorstehen, die Kühlmittelabschnitte 6c und 7c dagegen verlaufen innerhalb der Hülsenwandung bzw. bilden nach innen zu selbst einen Teil der Hülsenwandung. Sowohl an der Führungshülse 13 des Antriebsteils 1 als auch in einem Flansch 15 des Griffteils 3 sind Nuten 16, 17 und 18 vorhanden, in die im montierten Zustand die Kühlmittelleitungsabschnitte 6b, 7b und 6c, 7c eingelegt sind. Die beiden Hülsen 10, 11 sind dadurch gegen Verdrehung gesichert.

Die Hülse 11 enthält zwei Ringnuten 19, 20, die durch O-Ringe 21 gegeneinander abgedichtet sind. Zur Medienübertragung ist der Leitungsabschnitt 7b mit einer Radialbohrung 22 und der Leitungsabschnitt 6b an der gegenüberliegenden Seite am benachbarten Ringkanal (in der Darstellung nicht erkennbar) mit einer entsprechenden Bohrung (22') versehen. Ebenso enthält der Leitungsabschnitt 7c (bzw. 6c) eine mit dem Ringkanal 19 (bzw. 20) korrespondierende Radialbohrung 23 bzw. 23'. Die Medien werden also zunächst achsparallel eingeführt, dann radial über die Bohrungen 22 bzw. 22',

0023009

in die Ringkanäle 19 bzw. 20 geleitet, und von dort aus über die Bohrungen 23 (bzw. 23') in den achsparallel verlaufenden Leitungsabschnitt 7c (bzw. 6c) übergeführt. Stirnseitig sind die Leitungsabschnitte 6b, 7b sowie 6c und 7c durch Verschlußstopfen 24, 25 abgedichtet. Die Verschlußstopfen sind vorteilhafterweise abnehmbar gehaltert, so daß bei einer eventuellen Verstopfung der Leitungsabschnitte diese mittels eines Drahtes od. dgl. leicht gereinigt werden können. Anstelle der Verschlußstopfen können die Leitungsabschnitte an dieser Stelle auch als Sackbohrung ausgebildet sein.

Beim Abziehen des Griffteils 3 vom Antriebsteil 1 verbleiben die Hülsen 10 und 11 infolge eines vorhandenen Reib- oder auch Formschlusses zwischen Hülse 11 und Führungshülse 13 sowie Leitungsabschnitt 7b und O-Ringdichtung 26 einerseits, und Leitungsabschnitt 7c und Nut 16 bzw. einer der O-Ringdichtung 26 entsprechenden weiteren nicht dargestellten O-Ringdichtung im Handgriff zwischen Leitungsabschnitt 6c und 7c andererseits, zunächst an den Handstückteilen. Sind Antriebsteil 1 und Griffteil 3 voneinander getrennt, so besteht die Möglichkeit, die Hülse 11 als Träger für die Leitungsabschnitte 6b und 7b aus dem Antriebsteil 1 herauszuziehen, was durch die O-Ring-Steckverbindung der Leitungsabschnitte 7a und 7b leicht möglich ist, wobei der Leitungsabschnitt 7a zweckmäßigerweise eine Bohrung ist, in die der Leitungsabschnitt 7b hineingesteckt ist. Ebenso kann auch die Hülse 10 mit den beiden Leitungsabschnitten 6c, 7c vom Griffstück 3 zu Reinigungs- oder zu Austauschzwecken abgezogen werden. Da es sich bei den beiden konzentrisch zueinander angeordneten Hülsen 10 und 11 um fertigungstechnisch sehr einfache Teile handelt, ist ein eventueller Austausch

0023009

- 7 -        VPA 79 P 5070 EUR

der Leitungsabschnitte kosten- und zeitsparend durchzuführen.

Denkbar und im Rahmen der Erfindung ist es auch, die
beiden Hülsen als eine zwar axial voneinander trennbare, jedoch nicht betriebsmäßig, d. h. ohne Zuhilfenahme von Werkzeugen, trennbare, Baueinheit auszubilden. Die Baueinheit könnte mit dem Antriebsteil so
verbunden werden, daß sie bei Abnahme des Griffteils
vom Antriebsteil an diesem verbleibt. Bei einem Auswechseln des Griffteiles, z. B. um ein Winkelhandstück gegen ein gerades Handstück auszuwechseln, würden demnach die Drehkupplungsteile am Antriebsteil
verbleiben.

Patentansprüche

1. Zahnärztliche Handstückanordnung mit einem Antriebsteil, mit einer Antriebswelle zum Antrieb einer in einem mit dem Antriebsteil kuppelbaren, und demgegenüber drehbaren Griffteil drehbar gelagerten Aufnahmehülse für ein Zahnbehandlungswerkzeug, sowie mit inkorporierten Kühlmittelleitungsabschnitten für wenigstens ein Kühlmedium im Antriebsteil und im Griffteil, die über einen Ringkanal im einen, und über eine mit diesem korrespondierende, radial in den Ringkanal mündende Öffnung im anderen Handstückteil miteinander verbunden sind, d a d u r c h  g e k e n n z e i c h n e t ,  daß der Kühlmittelleitungsabschnitt (6b, 7b) mit dem Ringkanal (19, 20) einerseits, und der Kühlmittelleitungsabschnitt (6c, 7c) mit der radialen Öffnung (23, 23') andererseits, in je einer Hülse (11, 10) befestigt sind, daß die Hülsen (10, 11) konzentrisch zueinander angeordnet sind, und von den Hülsen (10, 11) die eine (11) am Antriebsteil (1) und die andere (10) am Griffteil (3) gegen Verdrehung gesichert, axial aber lösbar angeordnet sind.

2. Handstückanordnung nach Anspruch 1, d a d u r c h  g e k e n n z e i c h n e t ,  daß die Hülsen (10,11) ihrerseits axial leicht trennbar miteinander verbunden sind.

3. Handstückanordnung nach Anspruch 1 oder 2, d a - d u r c h  g e k e n n z e i c h n e t ,  daß die axiale Verbindung durch Reibungs- und/oder Formschluß gegeben ist.

4. Handstückanordnung nach einem der Ansprüche 1 bis 3, d a d u r c h   g e k e n n z e i c h n e t ,   daß zur Verdrehsicherung der Hülsen (10, 11) die Kühlmittelleitungsabschnitte (6b, 7b; 6c, 7c) dienen, in dem in der die Antriebswelle (12) umgebenden Hülse (13) einerseits und in einer mit dieser zusammenwirkenden Führungshülse (14) des Griffteils (3) andererseits, Bohrungen oder Längsnuten (16 bis 18) angeordnet sind, in die die im wesentlichen längs des Handstückes verlaufenden Kühlmittelleitungsabschnitte eingreifen.

5. Handstückanordnung nach einem der Ansprüche 1 bis 4, d a d u r c h   g e k e n n z e i c h n e t ,   daß die Kühlmittelleitungsabschnitte (6b, 7b; 6c, 7c) an ihren Enden, an denen sie an den Hülsen (10, 11) befestigt sind, durch lösbare Stopfen (24, 25) abgedichtet sind.

FIG 1

FIG 2

FIG 3

| Europäisches Patentamt | **EUROPÄISCHER RECHERCHENBERICHT** | Nummer der Anmeldung EP 80 10 4078.3 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl³) |
|---|---|---|---|
| | DE - A1 - 2 636 373 (SIEMENS)  * Seite 3, Zeile 1 bis Seite 5, Zeile 1 *  -- | 1 | A 61 C   1/08 |
| | DE - B1 - 2 659 060 (KALTENBACH & VOIGT)  * Spalte 3, Zeile 61 bis Spalte 4, Zeile 33 *  -- | 1 | RECHERCHIERTE SACHGEBIETE (Int. Cl³) |
| D | DE - A1 - 2 653 588 (KALTENBACH & VOIGT)  -- | | A 61 C   1/00 |
| D | DE - A1 - 2 431 472 (SIEMENS)  -- | | |
| A | DE - A1 - 2 750 451 (MICRO-MEGA)  -- | | |
| A | DE - B2 - 2 633 223 (SIEMENS)  -- | | |
| A | DE - A1 - 2 606 062 (SIEMENS)  -- | | |
| A | US - A - 3 526 036 (GOOF)  ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Grunden angeführtes Dokument
&: Mitglied der gleichen Patent-familie, übereinstimmendes Dokument

X  Der vorliegende Recherchenbericht wurde für alle Patentansprüche erstellt.

| Recherchenort Berlin | Abschlußdatum der Recherche 13-10-1980 | Prüfer SIMON |